# EUROPEAN PATENT APPLICATION

(11) **EP 3 906 889 A1**
(43) Date of publication of application: **10.11.2021**
(21) Application number: 19910924.0
(22) Date of filing: 21.01.2019
(51) Int. Cl.: A61C 8/00

(54) **ONE-PIECE DENTAL IMPLANT**

(71) Applicant: Ho, Chih-Chung, Kaohsiung City, Taiwan 843 (TW)
(72) Inventor: Ho, Chih-Chung, Kaohsiung City, Taiwan 843 (TW)
(74) Representative: 2K Patentanwälte Blasberg Kewitz & Reichel
(86) International application number: PCT/CN2019/072511
(87) International publication number: WO 2020/150858

(57) **Abstract**

The present disclosure is relates to a one-piece dental implant including a first portion and a second portion. The first portion has a central axis, a bony portion, and a gingival portion. The bony portion is connected to the gingival portion. The second portion has a connection portion and a trimming portion. A cross-sectional area of the trimming portion is larger than a cross-sectional area of the gingival portion of the first portion in a direction perpendicular to the central axis L. The trimming portion has at least one side surface and a clamping portion. The at least one side surface of the trimming portion gradually expands upward. The cross-sectional area of the trimming portion gradually increases upward in the direction perpendicular to the central axis L. The clamping portion is disposed on an upper portion of the trimming portion.

## Description

### FIELD

The disclosure relates to a one-piece dental implant.

### BACKGROUND

Generally, dental implants can be roughly divided into two-piece dental implants and one-piece dental implants. A conventional two-piece dental implant includes a dental implant body and an abutment. The dental implant body and the abutment are separated. After the dental implant body is implanted, the abutment is mounted on the dental implant body. A conventional one-piece dental implant includes a dental implant body and an abutment that are integrally formed. After an artificial dental implantation operation is completed by using the one-piece dental implant, the abutment of the one-piece dental implant is exposed above the gingiva of a patient, and after a predetermined time for osseointegration, a prosthesis is mounted. Therefore, the conventional one-piece dental implant has advantages of a simple structure, good structural strength, and so on.

However, because different patients have different alveolar bones, when the conventional one-piece dental implant is implanted in the alveolar bone and the abutment is exposed above the gingiva, it is difficult for a dentist to control a mounting angle of the abutment. Further, because the mounting angle of the abutment cannot be modified and adjusted, the mounting quality and stability of the prosthesis are reduced easily when the prosthesis is subsequently mounted. Moreover, when the mounting angle of the abutment is deviated, interference is caused correspondingly in an occlusion process of the patient, resulting in discomfort and poor occlusion of the patient. Therefore, it is necessary to improve the conventional one-piece dental implant.

### SUMMARY OF THE INVENTION

In accordance with one aspect of the present disclosure, a one-piece dental implant includes a first portion and a second portion. The first portion has a central axis, a bony portion, and a gingival portion. The bony portion is connected to the gingival portion. An outer diameter of the gingival portion is smaller than a maximum outer diameter of the bony portion. The second portion has a connection portion and a trimming portion. The connection portion is connected to the gingival portion of the first portion corresponding to the central axis L. The trimming portion is connected to the connection portion. A cross-sectional area of the trimming portion is larger than a cross-sectional area of the gingival portion of the first portion in a direction perpendicular to the central axis L. The trimming portion has at least one side surface and a clamping portion. The at least one side surface of the trimming portion gradually expands upward. The cross-sectional area of the trimming portion gradually increases upward in the direction perpendicular to the central axis L. The clamping portion is disposed on an upper portion of the trimming portion.

### BRIEF DESCRIPTION OF THE DRAWINGS

Aspects of the present disclosure are understood from the following detailed description when read with the accompanying figures. It is emphasized that, in accordance with the standard practice in the industry, various features are not drawn to scale. In fact, the dimensions of the various features may be arbitrarily increased or reduced for clarity of discussion.
FIG. 1 is a front view of a one-piece dental implant according to an embodiment of the present invention.
FIG. 2 is a front view of a one-piece dental implant implanted into a periodontium of a patient according to an embodiment of the present invention.
FIG. 3 is a partial cross-sectional view of a one-piece dental implant after a part of a trimming portion is shaved according to an embodiment of the present invention.
FIG. 4 is a partial cross-sectional view of a one-piece dental implant after a prosthesis is mounted according to an embodiment of the present invention.
FIG. 5 is a top view of a first embodiment of a second portion of a one-piece dental implant according to the present invention.
FIG. 6 is a top view of a second embodiment of a second portion of a one-piece dental implant according to the present invention.
FIG. 7 is a top view of a third embodiment of a second portion of a one-piece dental implant according to the present invention.
FIG. 8 is a top view of a fourth embodiment of a second portion of a one-piece dental implant according to the present invention.
FIG. 9 is a partial cross-sectional view of a one-piece dental implant after a part of a trimming portion is shaved (by using the second portion of FIG. 7) according to an embodiment of the present invention.
FIG. 10 is a front view of a one-piece dental implant according to an embodiment of the present invention.
FIG. 11 is a front view of a one-piece dental implant according to an embodiment of the present invention.

### DETAILED DESCRIPTION OF THE INVENTION

It is to be understood that the following disclosure provides many different embodiments or examples, for implementing different features of various embodiments. Specific examples of components and arrangements are described below to simplify the present disclosure. The present disclosure may, however, be embodied in many different forms and should not be construed as being limited to the embodiments set forth herein; rather, these embodiments are provided so that this description will be thorough and complete, and will fully convey the present disclosure to those of ordinary skill in the art. It will be apparent, however, that one or more embodiments may be practiced without these specific details.

In addition, the present disclosure may repeat reference numerals and/or letters in the various examples. This repetition is for the purpose of simplicity and clarity and does not in itself dictate a relationship between the various embodiments and/or configurations discussed.

It will be understood that when an element is referred to as being "on" another element, it can be directly on the other element or intervening elements may be present. In contrast, when an element is referred to as being "directly on" another element, there are no intervening elements present.

It will be understood that singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms; such as those defined in commonly used dictionaries, should be interpreted as having a meaning that is consistent with their meaning in the context of the relevant art and the present disclosure, and will not be interpreted in an idealized or overly formal sense unless expressly so defined herein.

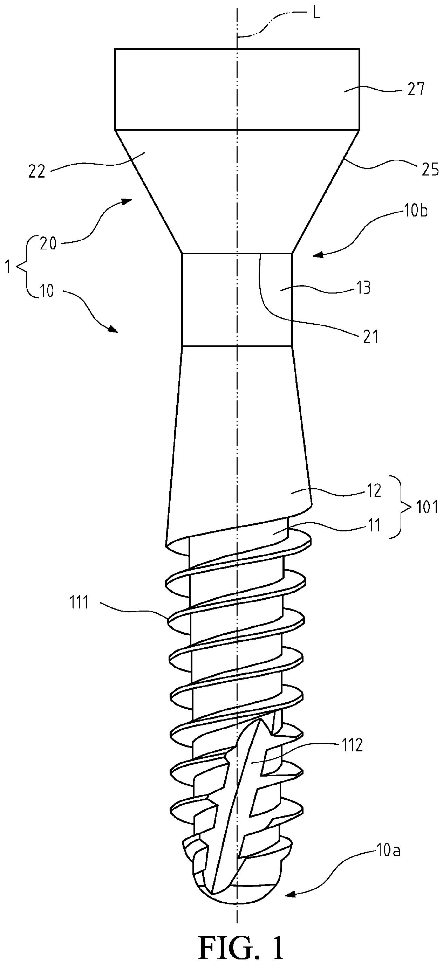

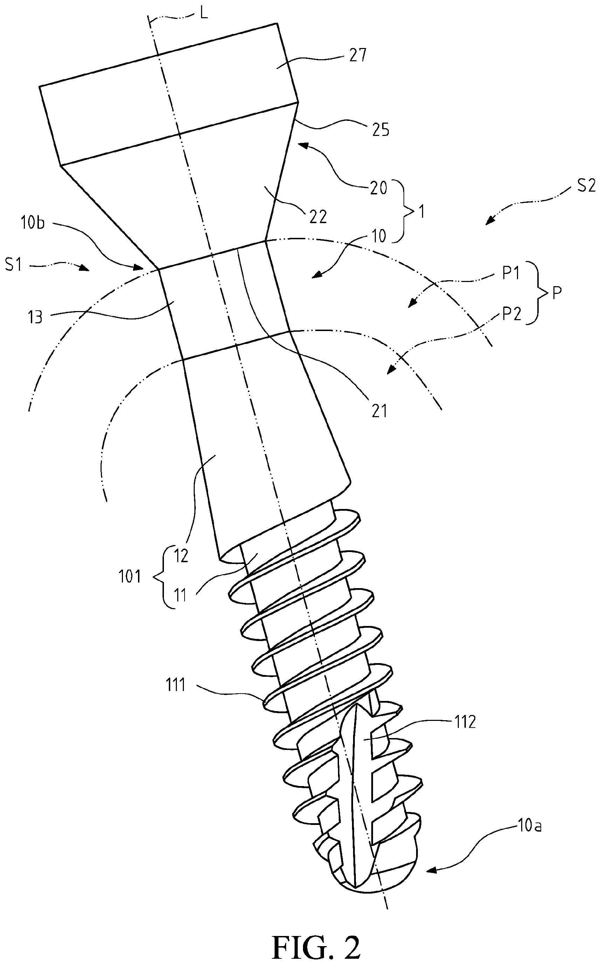

FIG. 1 is a front view of a one-piece dental implant according to an embodiment of the present invention. FIG. 2 is a front view of a one-piece dental implant implanted into a periodontium of a patient according to an embodiment of the present invention. Referring to FIG. 1 and FIG. 2, in an embodiment, a one-piece dental implant 1 in the present invention includes a first portion 10 and a second portion 20. The first portion 10 is locked inside a periodontium P of a patient, and the second portion 20 is exposed outside the periodontium P. The periodontium P has a gingival P1 and an alveolar bone P2. In the following description, a side of the periodontium P away from the tongue of the patient is defined as a "buccal side S1" and a side close to the tongue of the patient is defined as a "lingual side S2". The term "upper" in this specification means being away from the alveolar bone of the patient and the term "lower" in this specification means being opposite to "upper". The term "distal side" in this specification refers to a direction away from a center line or the front of a body; the term "mesial side" in this specification refers to a direction close to the center line or the front of the body.

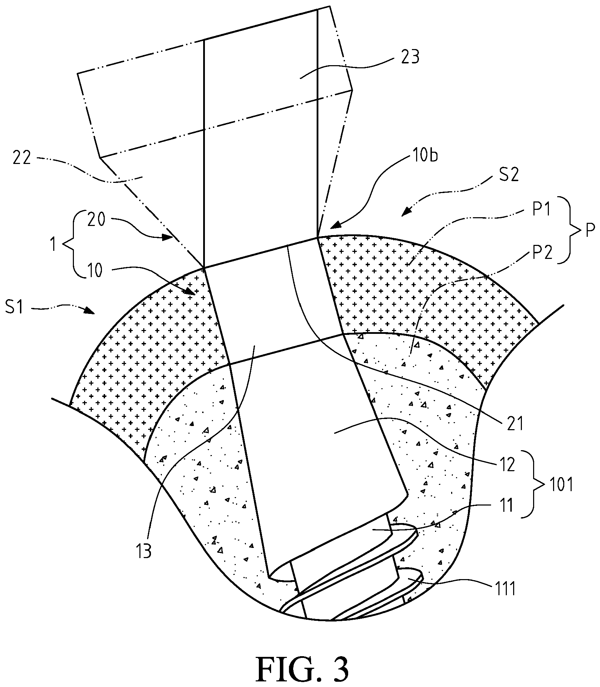

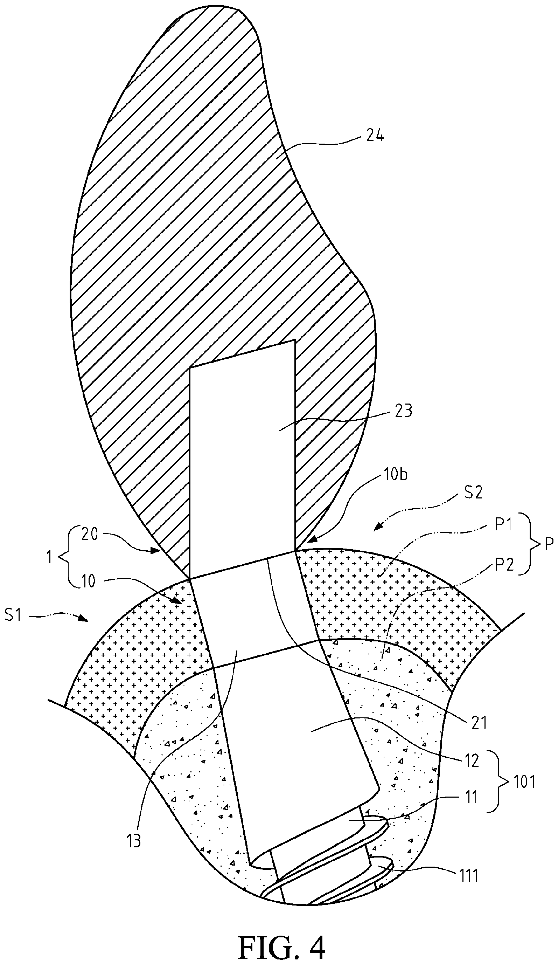

FIG. 3 is a partial cross-sectional view of a one-piece dental implant after a part of a trimming portion is shaved according to an embodiment of the present invention. FIG. 4 is a partial cross-sectional view of a one-piece dental implant after a prosthesis is mounted according to an embodiment of the present invention. Referring to FIG. 2 to FIG. 4, in an embodiment, the first portion 10 includes a central axis L, an bony portion 101, and a gingival portion 13, and the bony portion 101 is connected to the gingival portion 13. The second portion 20 includes a connection portion 21 and a trimming portion 22. The connection portion 21 is connected to the gingival portion 13 of the first portion 10 corresponding to the central axis L, and the trimming portion 22 is connected to the connection portion 21. In addition, the cross-sectional area of the trimming portion 22 is larger than the cross-sectional area of the gingival portion 13 of the first portion 10 in a direction perpendicular to the central axis L1. The trimming portion 22 includes at least one side surface 25 and a clamping portion 27. The at least one side surface 25 of the trimming portion 22 gradually expands upward, so that the cross-sectional area of the trimming portion 22 gradually increases upward, and the clamping portion 27 is disposed on an upper portion of the trimming portion 22. In this way, structure design of the trimming portion 22 may be used to shave or grind a part of the trimming portion 22 by using a tool, so that the trimming portion 22 after shaving and the connection portion 21 may jointly form an abutment 23 (as shown in FIG. 3), and the abutment 23 allows a prosthesis 24 to be mounted (as shown in FIG. 4).

Referring to FIG. 1 and FIG. 2, in an embodiment, the first portion 10 includes a relatively free end 10a and a connecting end 10b, and the connection portion 21 of the second portion 20 is connected to the connecting end 10b. A locking portion 11, a guide portion 12, and the gingival portion 13 are arranged on the first portion 10 in sequence from the free end 10a to the connecting end 10b, that is, the bony portion 101 includes the locking portion 11 and the guide portion 12, which are set in the bone of the patient. An outer diameter of the guide portion 12 gradually decreases from the locking portion 11 to the gingival portion 13, and an outer diameter of the gingival portion 13 is smaller than the maximum outer diameter of the bony portion 101 and smaller than or equal to the outer diameter of the guide portion 12. In this way, when the one-piece dental implant 1 is implanted in the periodontium P, because the guide portion 12 has no screw thread, force and damage can be reduced; and because the outer diameter of the guide portion 12 is gradually smaller than an outer diameter of the locking portion 11, more bones can be accommodated around the guide portion 12, making the bone around the guide portion 12 thicker. In addition, the gingival portion 13 having a relatively small outer diameter is located on the gingiva P1 of the periodontium to accommodate more keratinized gingivae, which achieves better protection and can effectively reduce inflammation around the one-piece dental implant 1.

In an embodiment, the locking portion 11 of the first portion 10 is an external screw thread 111. In this way, the external screw thread 111 of the locking portion 11 allows the one-piece dental implant 1 to be locked into the alveolar bone P2 of the patient more easily and effortlessly. In addition, a notch 112 may be provided on an outer peripheral surface of the locking portion 11 of the first portion 10, and the notch 112 extends from the free end 10a to the connecting end 10b in an axial direction of the central axis L. In this way, the notch 112 is used for discharging excess bone debris through the notch 112 in a process of implanting the one-piece dental implant 1 of the present invention into the alveolar bone P2 of the patient, and then the notch can resist a rotation force of the dental implant to ensure that the one-piece dental implant 1 is tightly combined with the alveolar bone P2.

Referring to FIG. 2, in an embodiment, the at least one side surface 25 of the trimming portion 22 gradually expands upward, so that the cross-sectional area of the trimming portion 22 gradually increases upward, that is, the trimming portion 22 of the second portion 20 is adjacent to an outer peripheral surface of the connection portion 21 to form an oblique cone side surface, and the oblique cone side surface gradually expands and extends upward, so that the cross-sectional area of the trimming portion 22 gradually increases. In an embodiment, the trimming portion 22 has a plurality of side surfaces, and the plurality of side surfaces symmetrically and gradually expand upward, so that the cross-sectional area of the trimming portion 22 symmetrically and gradually increases upward, that is, the cross-sectional area of the trimming portion 22 symmetrically and gradually increases upward in an average manner. In an embodiment, the clamping portion 27 of the trimming portion 22 of the second portion 20 is disposed on an outer edge of the upper portion of the trimming portion 22 of the second portion 20. The clamping portion 27 is connected to the side surface 25 and corresponds to the central axis L. The clamping portion 27 has a cut surface in the same direction as the central axis L. The at least one cut surface of the clamping portion 27 is disposed on an outer side surface of the upper portion of the trimming portion 22, to allow a clamping apparatus to clamp and fix, rotate and lock or screw out the one-piece dental implant 1, so as to facilitate a dental implantation operation. The clamping portion 27 has a length of about 1.0 mm, and does not need to be excessively long; if the length exceeds 2.5 mm, an angle of the side surface 25 is excessively small for the same height, which requires more grinding in the future and is not conducive to clinical operation.

Based on the foregoing structure design, several embodiments are further listed in detail below to illustrate various structure types of the second portion 20 of the one-piece dental implant 1 of the present invention, but the present invention is not limited to the embodiments listed below.

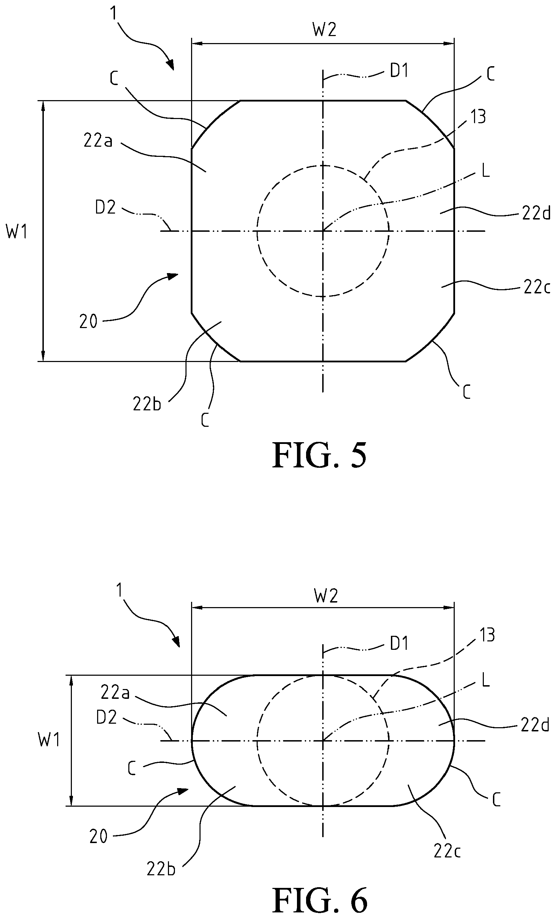

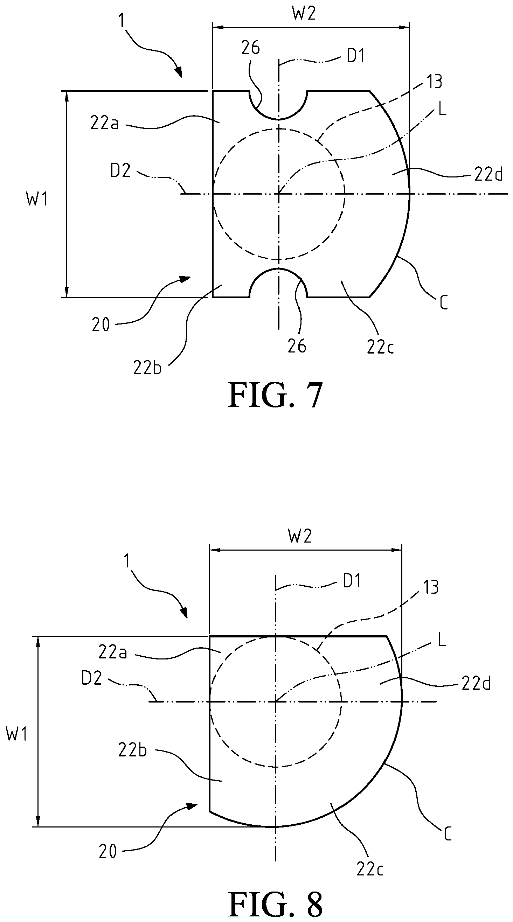

FIG. 5 is a top view of a first embodiment of a second portion of a one-piece dental implant according to the present invention. FIG. 6 is a top view of a second embodiment of a second portion of a one-piece dental implant according to the present invention. FIG. 7 is a top view of a third embodiment of a second portion of a one-piece dental implant according to the present invention. FIG. 8 is a top view of a fourth embodiment of a second portion of a one-piece dental implant according to the present invention. Referring to FIG. 5 to FIG. 8, in the embodiments, the one-piece dental implant 1 has a first reference plane D1 and a second reference plane D2 that radially pass through the central axis L. The first reference plane D1 and the second reference plane D2 are perpendicular to each other, so as to divide the trimming portion 22 of the second portion 20 into a first block 22a, a second block 22b, a third block 22c, and a fourth block 22d. The first block 22a, the second block 22b, the third block 22c, and the fourth block 22d may have the same shape and be symmetrical with each other, or may have different shapes and be asymmetrical with each other, and the present invention is not limited, so as to improve the manufacturing convenience of the one-piece dental implant 1 and provide more diversified functions.

Referring to FIG. 1 and FIG. 5, in the first embodiment, a shape of the first block 22a of the trimming portion 22 is the same as and symmetrical with a shape of the second block 22b of the trimming portion 22, the shape of the second block 22b of the trimming portion 22 is the same as and symmetrical with a shape of the third block 22c of the trimming portion 22, the shape of the third block 22c of the trimming portion 22 is the same as and symmetrical with a shape of the fourth block 22d of the trimming portion 22, and the shape of the fourth block 22d of the trimming portion 22 is the same as and symmetrical with the shape of the first block 22a of the trimming portion 22. In a direction perpendicular to the central axis L1, the first block 22a and the second block 22b have a first radial width W1, and the first block 22a and the fourth block 22d have a second radial width W2. The first radial width W1 is equal to the second radial width W2. In this way, an overall shape of the trimming portion 22 is complete and symmetrical, thereby having more margins for shaving and grinding; moreover, implantation directivity does not need to be considered when the one-piece dental implant is implanted. In an embodiment, four side surfaces of the trimming portion 22 symmetrically and gradually expand upward, so that the cross-sectional area of the trimming portion symmetrically and gradually increases upward. In an embodiment, the first block 22a, the second block 22b, the third block 22c, and the fourth block 22d may be each provided with an arc surface C at a corner position away from the central axis LI. In this way, by using an arc angle modification design of the arc surface C, the discomfort caused by the second portion 20 in the mouth of the patient can be effectively alleviated after the dental implantation operation.

Referring to FIG. 1 and FIG. 6, in the second embodiment, a shape of the first block 22a of the trimming portion 22 is the same as and symmetrical with a shape of the second block 22b of the trimming portion 22, the shape of the second block 22b of the trimming portion 22 is the same as and symmetrical with a shape of the third block 22c of the trimming portion 22, the shape of the third block 22c of the trimming portion 22 is the same as and symmetrical with a shape of the fourth block 22d of the trimming portion 22, and the shape of the fourth block 22d of the trimming portion 22 is the same as and symmetrical with the shape of the first block 22a of the trimming portion 22. In a direction perpendicular to the central axis L1, the first block 22a and the second block 22b have a first radial width W1, and the first block 22a and the fourth block 22d have a second radial width W2. The first radial width W1 is smaller than the second radial width W2. In addition, a junction position of the first block 22a and the second block 22b is provided with an arc surface, a junction position of the third block 22c and the fourth block 22d is provided with an arc surface C, and the arc surfaces C are far away from the central axis L1. In addition, a side at which the first block 22a and the fourth block 22d are connected is aligned with an extended imaginary outer diameter circle (as shown by the dashed line) of the gingival portion 13 of the first portion 10; and a side at which the second block 22b and the third block 22c are connected is aligned with an extended imaginary outer diameter circle (shown by the dashed line) of the gingival portion 13 of the first portion 10, that is, when the one-piece dental implant 1 of this embodiment is manufactured, the trimming portion 22 is allowed to have two opposite sides that are relatively narrow. In this way, the two opposite sides that are relatively narrow of the trimming portion 22 can be used to reduce a shaved and ground volume of the trimming portion 22 in the future. However, when the one-piece dental implant is implanted, the implantation directivity needs to be considered. For example, a direction of the second radial width W2 is a direction of "buccal side S1" and "lingual side S2". In an embodiment, two side surfaces of the trimming portion 22 symmetrically and gradually expand upward, so that the cross-sectional area of the trimming portion symmetrically and gradually increases upward in a direction of the two side surfaces.

Referring to FIG. 1 and FIG. 7, in the third embodiment, a shape of the first block 22a of the trimming portion 22 is the same as and symmetrical with a shape of the second block 22b of the trimming portion 22, the shape of the second block 22b of the trimming portion 22 is different from and asymmetrical with a shape of the third block 22c of the trimming portion 22, the shape of the third block 22c of the trimming portion 22 is the same as and symmetrical with a shape of the fourth block 22d of the trimming portion 22, and the shape of the fourth block 22d of the trimming portion 22 is different from and asymmetrical with the shape of the first block 22a of the trimming portion 22. In a direction perpendicular to the central axis L1, the first block 22a and the second block 22b have a first radial width W1, and the first block 22a and the fourth block 22d have a second radial width W2. The first radial width W1 is greater than the second radial width W2. In addition, a side at which the first block 22a and the second block 22b are connected is aligned with an extended imaginary outer diameter circle (as shown by the dashed line) of the gingival portion 13 of the first portion 10, that is, when the one-piece dental implant 1 of this embodiment is manufactured, the trimming portion 22 is allowed to have one side that is relatively narrow to reduce a shaved and ground volume of the trimming portion 22 in the future. In this embodiment, the third block 22c and the fourth block 22d of the trimming portion 22 deviate from the central axis L1, to adapt to directions of alveolar bones of different patients. In addition, a groove 26 may be formed on opposite outer sides of the first block 22a and the fourth block 22d of the trimming portion 22, and a groove 26 may be formed on opposite outer sides of the second block 22b and the third block 22c of the upper portion of the trimming portion 22. The grooves 26 are arranged on the clamping portion 27, so that the grooves 26 coordinate with the clamping apparatus to clamp and fix, rotate and lock or screw out the one-piece dental implant 1, so as to facilitate a dental implantation operation. In an embodiment, the clamping portion 27 has at least one groove 26 or cut surface in the same direction as the central axis L1. In an embodiment, a junction position of the third block 22c and the fourth block 22d may be provided with an arc surface C, and the arc surface C is far away from the central axis L1. In an embodiment, one side surface of the trimming portion 22 asymmetrically and gradually expands upward, so that the cross-sectional area of the trimming portion asymmetrically and gradually increases upward.

Referring to FIG. 1 and FIG. 8, in the fourth embodiment, the shapes of the first block 22a, the second block 22b, the third block 22c, and the fourth block 22d of the trimming portion 22 are all different and asymmetric. In a direction perpendicular to the central axis L1, the first block 22a and the second block 22b have a first radial width W1, and the first block 22a and the fourth block 22d have a second radial width W2. The first radial width W1 is equal to the second radial width W2. In addition, a side at which the first block 22a and the fourth block 22d are connected is aligned with an extended imaginary outer diameter circle (as shown by the dashed line) of the gingival portion 13 of the first portion 10; and a side at which the first block 22a and the second block 22b are connected is aligned with an extended imaginary outer diameter circle (shown by the dashed line) of the gingival portion 13 of the first portion 10. In this embodiment, the third block 22c of the trimming portion 22 may slightly deviate from the central axis L1, to adapt to directions of alveolar bones of different patients and rotate to a suitable angle according to the direction of the alveolar bone of the patient. In addition, a junction position of the second block 22b, the third block 22c and the fourth block 22d may be provided with an arc surface C, and the arc surface C is far away from the central axis L1. In an embodiment, one side surface of the trimming portion 22 asymmetrically and gradually expands upward, so that the cross-sectional area of the trimming portion asymmetrically and gradually increases upward.

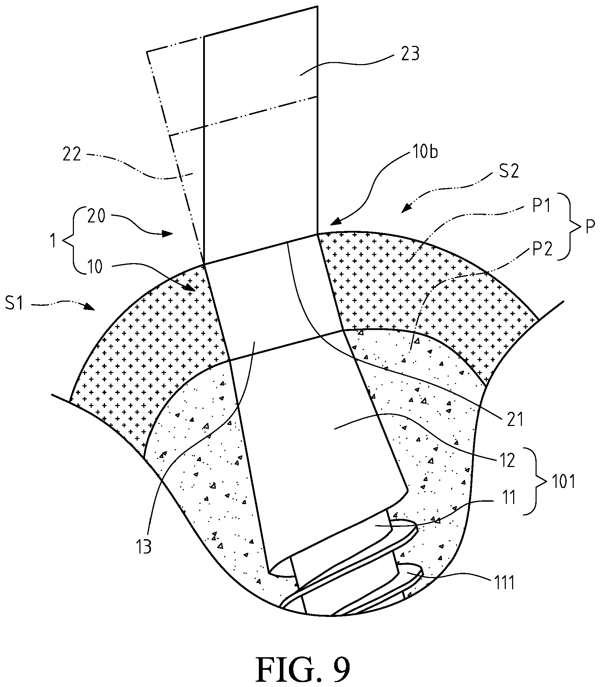

FIG. 9 is a partial cross-sectional view of a one-piece dental implant after a part of a trimming portion is shaved (by using the second portion of FIG. 7) according to an embodiment of the present invention. Referring to FIG. 3 and FIG. 9, the trimming portion 22 of the second portion 20 of FIG. 5 is used in FIG. 3, and the trimming portion 22 of the second portion 20 of FIG. 7 is used in FIG. 9. Therefore, compared with FIG. 3, when the one-piece dental implant 1 in FIG. 9 is manufactured, the trimming portion 22 is allowed to have one side that is relatively narrow, which generally can reduce irritation to the buccal side after implantation and reduce shaving volume for later abutment preparation.

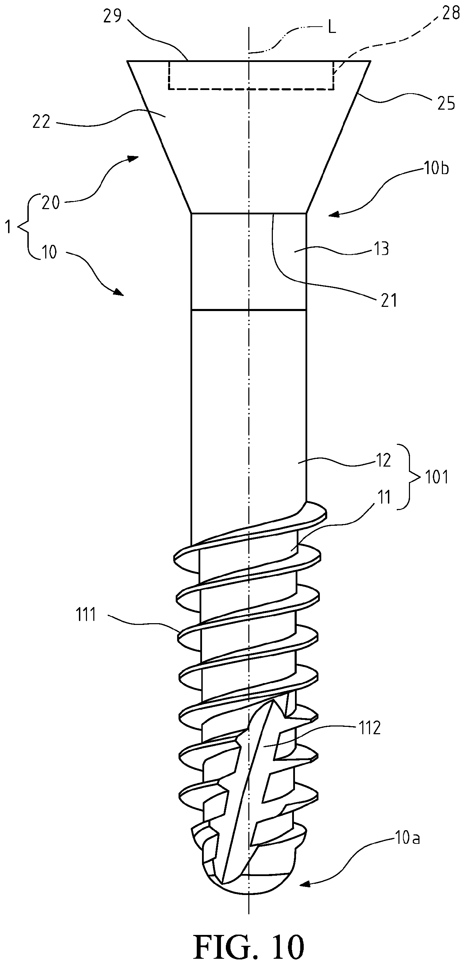

FIG. 10 is a front view of a one-piece dental implant according to an embodiment of the present invention. Referring to FIG. 10, different from the embodiment of FIG. 1, the outer diameter of the gingival portion 13 of the first portion 10 is equal to the outer diameter of the guide portion 12. In addition, in an embodiment, the trimming portion 22 of the second portion 20 of the embodiment of FIG. 10 does not include the clamping portion 27 of the cut surface in the same direction with the central axis L1 in the embodiment of FIG. 1. The trimming portion 22 of the second portion 20 of the embodiment of FIG. 10 includes a clamping portion 28 disposed on an upper portion of the second portion 20. Corresponding to the central axis L, the clamping portion 28 includes a relatively upright groove, the at least one groove of the clamping portion 28 is arranged inside the upper portion of the trimming portion 22, and the at least one groove extends downward from a top surface 29 of the trimming portion to form an inner groove, to allow a clamping apparatus in a corresponding shape to extend into the groove to clamp and fix, rotate and lock or screw out the one-piece dental implant 1, so as to facilitate a dental implantation operation. Because the size of the groove of the clamping portion 28 may be fixed, such a design allows implants of different specifications to use the same clamping apparatus. In addition, because the at least one groove of the clamping portion 28 is arranged inside the upper portion of the trimming portion 22, and an action of the clamping apparatus extending into the groove does not increase an operation radius or an operation range, which is clinically less interfered by an adjacent tooth.

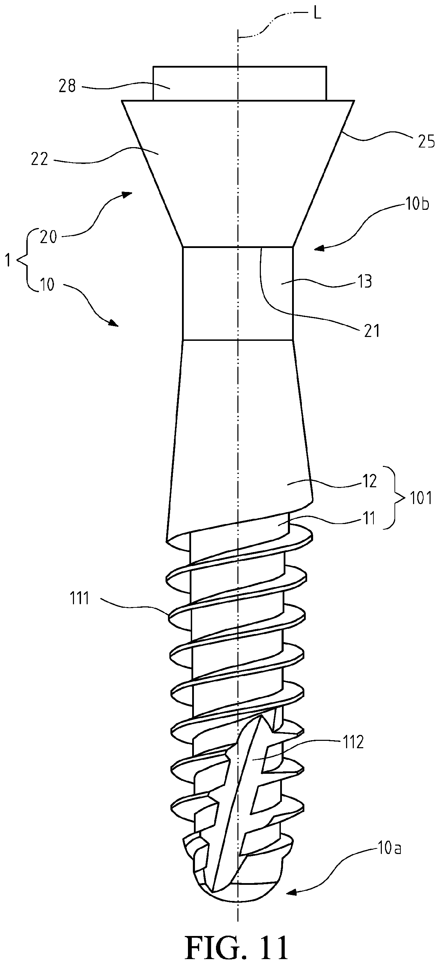

FIG. 11 is a front view of a one-piece dental implant according to an embodiment of the present invention. Referring to FIG. 11, different from the embodiment of FIG. 10, the trimming portion 22 of the second portion 20 of the embodiment of FIG. 11 has a clamping portion 28 disposed on the upper portion of the second portion 20, and the clamping portion 28 is not connected to the side surface 25, that is, the cross-sectional area of the clamping portion 28 is smaller than the largest cross-sectional area of the side surface 25. Corresponding to the central axis L, the clamping portion 28 includes a relatively upright area or a cut surface, to allow a clamping apparatus to clamp and fix, rotate and lock or screw out the one-piece dental implant 1, so as to facilitate a dental implantation operation. Because the size of the clamping portion 28 may be fixed, such a design allows implants of different specifications to use the same clamping apparatus.

Referring to FIG. 3 and FIG. 4, in the foregoing embodiment, when the one-piece dental implant 1 of the present invention is applied to the dental implantation operation, the first portion 10 can lock the gingiva P1 and the alveolar bone P2 of the patient, to achieve a fastening function. When the alveolar bone of the patient is deflected on the "buccal side S1" or "lingual side S2", the dentist can implant the one-piece dental implant 1 of the present invention according to a direction of the deflected alveolar bone of the patient. As shown in FIG 3, the one-piece dental implant 1 is implanted obliquely toward a direction of the "lingual side S2". In other words, deflection angles of the alveolar bone on the "buccal side S1" or "lingual side S2" are different according to different patients. The dentist can only control an angle of a mesial side and a distal side but cannot change the deflection angle of the alveolar bone on the "buccal side S 1" or "lingual side S2". After implantation, the second portion 20 (shown by the dashed line) is relatively located outside the periodontium P of the patient. After the dental implantation operation is completed and a predetermined time is used for osseointegration, the one-piece dental implant body 1 can be tightly combined with the periodontium P of the patient. After the osseointegration, for different patients, the dentist can perform a shaving or grinding operation in the direction of clinical situation, such as the direction of the "buccal side S1", the "lingual side S2", the "mesial side", or the "distal side" by using a tool in coordination with the structure design that the trimming portion 22 is allowed to be shaved, so as to form the abutment 23 in a suitable size at a suitable angle.

The conventional abutment has an angle of 6 to 8 degrees, and the conventional abutment needs a longer size to achieve a good retention force to set up a prosthesis. However, the conventional longer abutment causes interference during an osseointegration period, that is, a chance of being bitten by the patient increases, reducing a success rate of the conventional dental implantation. Because the abutment 23 of the one-piece dental implant 1 of the present invention can be ground to close to 0 degrees, the abutment 23 only needs to have length of about 4 mm to achieve a good retention force for the prosthesis. Therefore, by using a shorter second portion 20, the present invention can reduce the interference during the osseointegration period after dental implantation, thereby improving the success rate of dental implantation.

Moreover, the scope of the present application is not intended to be limited to the particular embodiments of the process, machine, manufacture, and composition of matter, means, methods and steps described in the specification. As those skilled in the art will readily appreciate form the present disclosure, processes, machines, manufacture, compositions of matter, means, methods, or steps, presently existing or later to be developed, that perform substantially the same function or achieve substantially the same result as the corresponding embodiments described herein may be utilized in accordance with some embodiments of the present disclosure.

Accordingly, the appended claims are intended to include within their scope such processes, machines, manufacture, and compositions of matter, means, methods or steps. In addition, each claim constitutes a separate embodiment, and the combination of various claims and embodiments are within the scope of the invention.

### List of Reference Numerals

- 1: Single-piece dental implants
- 10: first portion
- 10a: free end
- 10b: connecting end
- 101: Internal bone
- 11: locking portion
- 111: male thread
- 112: notch
- 12: Guiding section
- 13: gingival portion
- 20: second portion
- 21: connecting portion
- 22: trimming portion
- 22a: first block
- 22b: second block
- 22c: third block
- 22d: fourth block
- 23: abutment
- 24: prosthesis
- 25: side surface
- 26: recess
- 27: clamping section
- 28: clamping portion
- 29: Top surface
- C: arc surface
- D1: first reference plane
- D2: second reference plane
- L: central axis
- P: periodontium tissue
- P1: gingival
- P2: alveolar bone
- S1: buccal side
- S2: lingual side
- W1: first radial width
- W2: second radial width

## Claims

1. A one-piece dental implant, comprising:
a first portion, having a central axis, a bony portion, and a gingival portion, the bony portion connected to the gingival portion, an outer diameter of the gingival portion being smaller than a maximum outer diameter of the bony portion;
a second portion, having a connection portion and a trimming portion, the connection portion connected to the gingival portion of the first portion corresponding to the central axis L, the trimming portion connected to the connection portion, a cross-sectional area of the trimming portion being larger than a cross-sectional area of the gingival portion of the first portion in a direction perpendicular to the central axis L, the trimming portion having at least one side surface and a clamping portion, the at least one side surface of the trimming portion gradually expanding upward, the cross-sectional area of the trimming portion gradually increasing upward in the direction perpendicular to the central axis L, and the clamping portion disposed on an upper portion of the trimming portion.

2. The one-piece dental implant of Claim 1, wherein the trimming portion of the second portion is adjacent to an outer peripheral surface of the connection portion to form an oblique cone side surface, and the oblique cone side surface gradually expands and extends upward, and the cross-sectional area of the trimming portion gradually increases in the direction perpendicular to the central axis L.

3. The one-piece dental implant of Claim 1, wherein the trimming portion has a plurality of side surfaces, and the plurality of side surfaces symmetrically and gradually expand upward, and the cross-sectional area of the trimming portion symmetrically and gradually increases upward in the direction perpendicular to the central axis L.

4. The one-piece dental implant of Claim 1, wherein the at least one side surface of the trimming portion asymmetrically and gradually expands upward, and the cross-sectional area of the trimming portion asymmetrically and gradually increases upward in the direction perpendicular to the central axis L.

5. The one-piece dental implant of Claim 1, wherein the clamping portion has at least one groove or at least one cut surface in the same direction as the central axis L.

6. The one-piece dental implant of Claim 5, wherein the at least one groove or the at least one cut surface of the clamping portion is disposed on an outer side surface of the upper portion of the trimming portion.

7. The one-piece dental implant of Claim 5, wherein the at least one groove of the clamping portion is arranged inside the upper portion of the trimming portion, and the at least one groove extends downward from a top surface of the trimming portion.
